# EUROPEAN PATENT SPECIFICATION

(11) **EP 2 155 015 B1**
(45) Date of publication and mention of the grant of the patent: **23.08.2017**
(21) Application number: 07748193.5
(22) Date of filing: 01.06.2007
(51) Int. Cl.: A45F 5/14, A45F 3/14, F16M 13/04

(54) **Harness for a clearing saw**
Gurtzeug für eine Motorsense
Harnais pour une débroussailleuse

(43) Date of publication of application: 24.02.2010
(73) Proprietor: Husqvarna Aktiebolag, 561 82 Huskvarna (SE)
(72) Inventor: CARLSSON, Daniel, 553 23 Jönköping (SE)
(86) International application number: PCT/SE2007/000529
(87) International publication number: WO 2008/147256

(56) References cited:
- EP-A2- 0 747 095
- EP-A2- 0 747 095
- WO-A2-2007/079387
- GB-A- 2 418 133
- US-A- 4 676 418
- US-B1- 6 247 624
- US-B1- 6 247 624

## Description

### TECHNICAL FIELD

The present invention relates to a harness for a clearing saw, according to independent claim 1, the back plate including connections for shoulder straps and further attachment straps, such as a side strap and a waist belt.

### BACKGROUND ART

There is a wide variety of clearing saws and brush cutters in use in modern forestry and garden maintenance. This type of equipment is intended to be handled by one person alone, and since the equipment could be quite heavy and its vibrations and the possible counter forces, caused by the branches being cut, have to be taken into account, one readily realizes the need for some sort of harness to aid the user in carrying the weight of the equipment.

EP 0 747 095 discloses a harness for carrying on a back as a backpack heavy and bulky articles such as a breathing apparatus for more comfort and freedom of upper body movement. US 4,676,418 discloses a back pack having a frame and body mounting means providing a load distribution.

The simplest type of harness consists of a single band, which is worn by the user over one shoulder and across the back and chest respectively, to support the equipment at hip level. While this solution is sufficient for lighter equipment which is used seldom and during short periods of time, it is not adequate for professional users who use the equipment for days on end. As the clearing saws are usually designed for use on one side of the user's body, the load will always be carried on one and the same shoulder, which could cause strain in the user's body in the long run.

A better type of harness comprises one shoulder strap over each shoulder, a waist belt, a side strap, and a back plate to which all straps are connected as illustrated in US6,247,624. Quite often a shock-absorbing hip-pad is attached as well, against which a part of the equipment is supported during use. The different straps may be adjusted to the size of the user. However, there remain some problems with an uneven load on the user, especially when working in dense bushes or forests, where the user is moving and has to repeatedly bend over sideways to avoid branches and twigs. The back plate will hold the shoulder straps at approximately the same level, although one shoulder on the user is noticeably lower than the other. The shoulder on the higher level will receive more of the load from the equipment.

Another disadvantage with the latter type of harness is that by adjusting the shoulder straps to accommodate very tall or short users, the comfort and weight-distributing performance of the harness is compromised. For a tall user the shoulder straps may have to be maximally extended, which renders the harness more unstable, and for a short user there is the risk that the waist belt will be placed too low on the body, which is uncomfortable, and may give a suboptimal weight distribution.

### OBJECT OF THE INVENTION

Thus, a main object of the present invention is to improve existing harnesses, so that freedom of motion and an even weight distribution is attained for users of all sizes, even in motion.

### DISCLOSURE OF THE INVENTION

The object forming the basis of the present invention will be attained if the back plate intimated by way of introduction is characterized in that it comprises two rigid plate portions (4, 5) connectable to each other by means of a connection (3), said plate portions being adjustable in relation to each other to provide for good comfort for a user wearing the harness.

Regarding the harness the object is attained if it includes the above back plate.

Further advantages will be attained by the back plate defined in accordance with the present invention.

### BRIEF DESCRIPTION OF THE ACCOMPANYING DRAWINGS

The present invention will now be described in greater detail hereinbelow, with reference to the accompanying drawings. In the accompanying drawings:

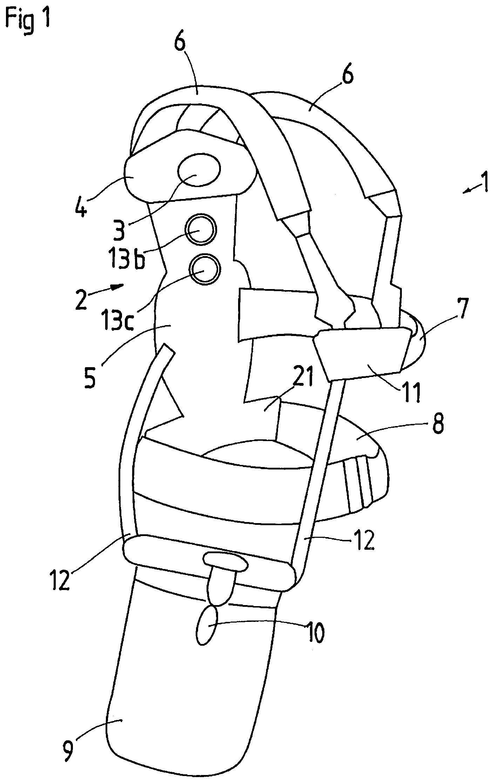

- Fig. 1: is a perspective view of a harness including the back plate according to a preferred embodiment of the invention;
- Figs. 2a and 2b: are plan views of the back plate according to the preferred embodiment of the invention in two different positions; and
- Fig. 3: is a sectional view of an upper portion of the back plate according to the preferred embodiment of the invention.

### DESCRIPTION OF PREFERRED EMBODIMENT

In the following description, when use is made of expressions relating to different directions, such as "upwards", "sidewards", "downwards" etc., they are to be understood as relating to the position of the harness when it is worn by a user.
such materials are polyethylene, polyamide, and polyoxymethylene. The thickness of the back plate 2, manufactured from such materials, is dimensioned such that the back plate 2 is felt to be rigid for its purposes.

The back plate 2 as a whole is not a rigid unit however, since it has a joint or connection 3, connecting an upper portion 4 with a lower portion 5. The connection 3 allows mutual rotation of the upper portion 4 and the lower portion 5 in a plane which is approximately defined by the extent of the back plate 2 itself.

Two shoulder straps 6 extend upward and forward from the top of the upper portion 4 of the back plate 2. The shoulder straps 6 are attached to a chest plate 11 after they have been adjusted to fit the user. Also attached to the chest plate 11 is a side strap 7, which extends from the side edge region of the lower portion 5 of the back plate 2, along the side of the user's body under the arm of the user and forward to the side region of the chest plate 11. The length of the side strap 7 is adjusted to fit snugly around the side of the user's body. The side strap 7 will take up lateral forces resulting from the weight of the equipment hanging on the other side of the user's body.

At the bottom of the lower portion 5 of the back plate 2, a waist belt 8 is attached and provided to adjustably extend around the waist of the user. The transversal part 21 is joined, for example sewn onto or into, the waist belt 8. Hereby the bottom end of the back plate 2 is kept in its intended place at the small of the back of the user. The fairly tight fit around the waist will result in that part of the weight of the equipment is taken up in the waist belt 8. The waist belt 8 may further be positioned some distance above or below the waist, depending on what the user feels is comfortable, and depending on the particular type of equipment he/she is carrying. The common objective is that the harness is stabilized on the user's body.

A shock absorbing hip pad 9 is provided at the side of the harness 1, on the opposite side from the side strap 7. At the upper region of the hip pad 9 there is provided a hook 10 for connection to the tool (clearing saw etc.) The hip pad 9 and the hook 10 are slidably suspended on a support strap 12, which extends from the lower portion 5 of the back plate 2 to the chest plate 11. The length of the support strap 12 can of course be adjusted to fit the user.

With all the possibilities of adjusting the straps 6, 7, 8, 11 the harness 1 should fit an upstanding user of average size with an excellent weight distribution, as would be the case with a similar harness according to the prior art. However, the harness 1 according to the invention provides a better accommodation to the movements of the user with an improved weight distribution during motions, as well as increased adjustment possibilities for users who are not average-sized.

The adjustability of the back plate 2 concerns either the mutual rotation of the two plate portions 4, 5 for improved freedom of motion and weight distribution, or the length adjustment of the back plate to fit users of different heights, or both of these aspects.

In the situation where the user bends to the side so that his/her upper body is tilted, and one shoulder is at a higher level than the other, instead of causing an increased load on the highest shoulder the harness 1 will adapt itself to the new position of the user's body, due to the connection 3 and the mutually rotary plate portions 4, 5 of the back plate 2. Typically, in this situation, the shoulders are the parts of the body that will deviate most from their original positions. When one of the shoulders starts to move upwards, it will impart a turning motion to the upper portion 4 of the back plate 2, by pulling the shoulder strap 6 on the same side upwards. The other shoulder strap 6 will then be lowered, as will the shoulder on that side of the user's body. Hence the position of the shoulder straps 6 will follow the position of the shoulders and the weight of the equipment attached to the harness 1 will continue to be evenly distributed. This would not have been the case if the back plate 2 had been a one piece, rigid back plate.

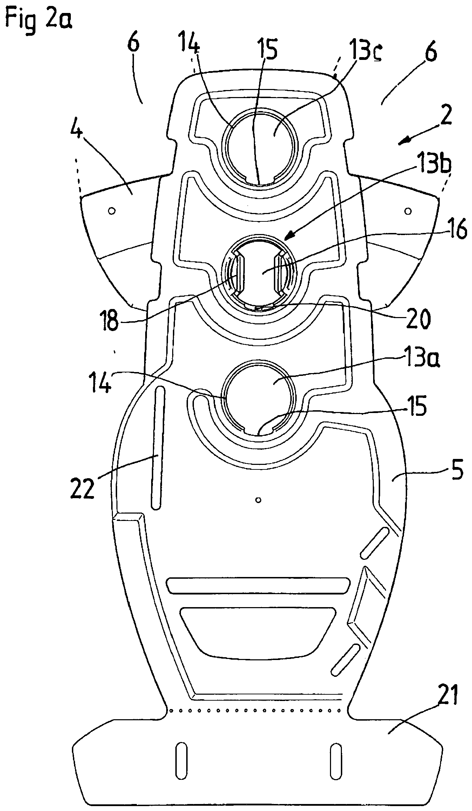

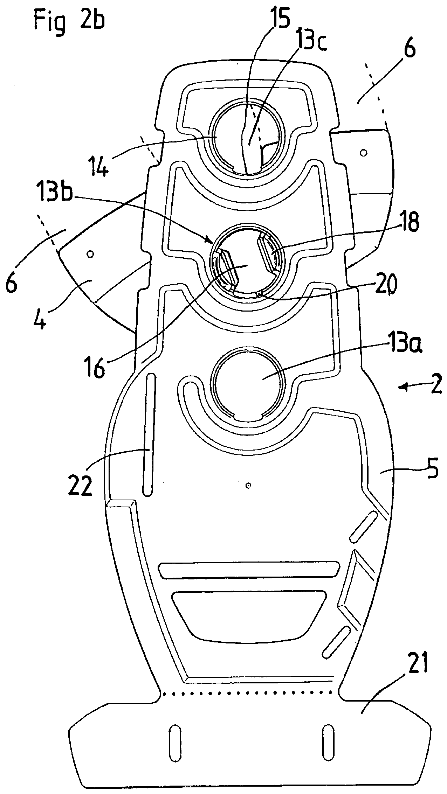

Figures 2a and 2b show the back plate 2 in different positions. Fig. 2a corresponds to an upright position of the user and Fig. 2b shows the position of the back plate 2 when the user is bending to the left. Not only are the upper and lower portions 4, 5 mutually rotary in either direction around the connection 3, but the total length of the back plate 2 is adjustable to fit users of different length. In the preferred embodiment this is achieved by making the connection 3 movable between different positions, placed on a mainly vertical line in the lower portion 5 of the back plate 2.

The upper portion 4 of the back plate 2 will be placed closest to the body, and the lower portion 5 will be placed so that it overlaps the upper portion 4 in the region of the connection 3. By adjusting the connection 3 from one position to another, e g from the lowest position, or hole 13a in the preferred embodiment, to the highest position 13c, the distance from the bottom of the lower portion 5 to the top of the upper portion 4 will be changed, since the overlap between the upper and lower portions 4, 5 is changed. The back plate 2 will display its longest length when the connection 3 is placed in the uppermost hole 13c in the lower portion 5, and its shortest length when the connection 3 is placed in the lowest hole 13a.

The three different positions 13a, 13b, 13c of the connection 3 will correspond to three different sizes (small, medium, large) of the back plate 2. The side strap 7 is positioned in the slot 22. Together with the adjustability of the shoulder straps 6, the harness 1, including the back plate 2, according to the invention, will fit more users better than harnesses according to prior art. The users will experience a better freedom of motion, as well as better comfort and weight distribution, and will be able to work for longer periods of time with the equipment without getting tired.

In detail, figures 2a and 2b show the back plate 2 comprising the two rigid portions 4, 5. As mentioned above, the connection 3 is movable, and in the preferred embodiment the lower portion 5 of the back plate 2 comprises three holes 13, each with an inwardly extending tongue 14 along at least a part of its circumference. In the preferred embodiment shown on the drawings, the tongue 14 extends along most of the circumference, except for a recess 15 at the lower part, of each hole 13a, 13b, 13c. On the upper portion 4 of the back plate 2, there is a flat, central device 16, which fits into either of the holes 13a, 13b, 13c in the lower portion 5 of the back plate 2 inside of the tongue 14.

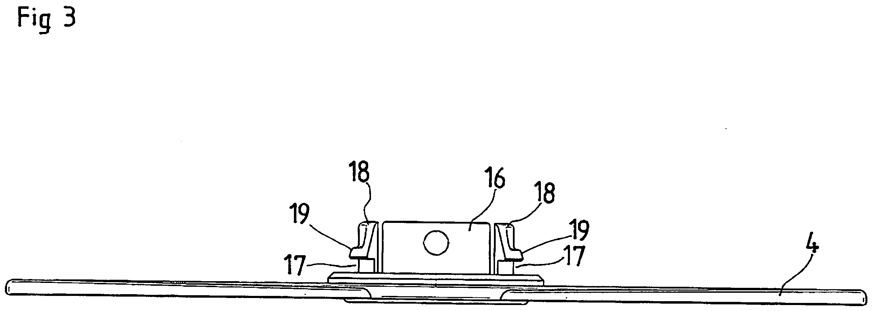

As is shown in figure 3, on the central device 16 there is a pair of resilient means 18, with a groove or narrow section 17 in their outer surfaces facing the tongue 14, or at least parts thereof. The tongue 14 of the hole 13a, 13b, 13c extends into the grooves or narrow sections 17 when the lower portion 5 of the back plate 2 is joined to the upper portion 4.

In order to move the connection 3 and lengthen or shorten the back plate 2, the resilient means 18 are pressed toward the center of the central device 16, in order to reduce the maximum outer distance of the resilient means 18, and letting them pass through the hole 13a, 13b, 13c, wherein the connection 3 is arranged. In order to join the upper portion 4 and the lower portion 5 of the back plate 2 in another position, thereby forming a new connection 3, the resilient means 18 are again pressed towards the center of the central device 16, either by hand or by pressing the upper parts of the resilient means 18 against the edges or the tongue 14 of a suitable hole 13a, 13b, 13c. In the preferred embodiment there are inclined surfaces 19 at the top region of the resilient means 18, which cause the resilient means 18 to move inward when a mainly vertical (as seen in figure 3) force is applied thereon. Hence the resilient means 18 and the central device 16 will slip into place in the hole 13a, 13b, 13c, with the tongue 14 mating with the grooves or narrow portions 17 in the resilient means 18.

In order to keep the harness 1 from twisting and tangling when it is not in use, the connections 3 are provided with stop means 20 to keep the upper portion 4 of the back plate 2 from turning more than is ever necessary during use. The maximum turning ability necessary should be less than a quarter of a turn (90 degrees) in both directions. In many applications the turning ability may be less than 45 degrees. Actually, in the preferred embodiment, the maximum turning ability is approximately 20 degrees in both directions. Also, when the weight distribution is not even, as the equipment is carried on one side of the body, the maximum turning ability need not be vertically symmetric. The user will in those cases tend to bend further to one side than to the other.

The stop means 20 is arranged on the central device 16 to fit into the recess 15. When the stop means 20 abuts the edge of the tongue 14, the turning in that direction is stopped.

In the preferred embodiment, the function of connecting the upper portion 4 of the back plate 2 with the lower portion 5 in different positions is integral with the function of making the plate portions 4, 5 mutually rotary.

### ALTERNATIVE EMBODIMENTS

A preferred embodiment of the harness 1 and the back plate 2 according to the invention has been described in detail above.

The relative positions of the upper and lower portions 4, 5 in relation to the back of the user may be inverted, so that the lower portion 5 of the back plate 2 is closest to the body of the user in the area where they overlap. The connection 3 may be modified accordingly.

In the drawings the number of possible positions for the connection 3 is three, as there are three holes 13a, 13b, 13c, corresponding to sizes small, medium, and large. This number may be reduced, but also increased. In fact the invention may be modified so that an infinite number of positions may be attained. For instance a longitudinal slit could be arranged in the lower portion 5 of the back plate 2, and the upper portion 4 may be slid in relation to the lower portion 5. This will probably require that the means for securing the upper and lower portions 4, 5 in relation to each other has to be separate from the means for making the connection rotary, e. g. they will have to be arranged in different geometrical planes.

Instead of the grooves 17 and tongue 14 in the connection 3, any other known means of obtaining movable connection may be employed, as long as the purpose of the invention is fulfilled.

A further possibility for the attachment of the harness 1 on the user's body is that the side strap 7 is excluded. This would be advatageous in the case where a well centered weight is carried, for example a blower carried on the back of the user.

In yet another alternative, the side strap 7 may extend from the upper portion 4 of the back plate 2 to the chest plate 11.

The waist belt 8 may be replaced with a strap that is positioned higher up on the user's body, in order to stabilize the lower part of the back plate 2. By waist belt is meant either a regular waist belt for taking up load from the harness and from the tool, or a more simple band, rope or strap attached to the back plate and running around the users body in order to stabilize the back plate.

## Claims

1. A harness for a clearing saw, the harness comprising a back plate, the back plate including connections for shoulder straps (6) and further attachment straps, such as a waist belt (8), wherein the harness further comprises a hip pad (9) provided with a hook (10) for connection to the clearing saw, wherein the hip pad (9) and the hook (10) are suspended on a support strap (12), **characterized in that** the back plate (2) comprises a rigid upper plate portion (4) and a rigid lower plate portion (5), said plate portions (4, 5) being connectable or connected to each other by means of a connection (3), said plate portions being adjustable in relation to each other to provide for good comfort for a user wearing the harness, wherein the support strap (12) extends from the lower plate portion (5).

2. Harness according to claim 1, **characterized in that** the connection (3) is rotatable, making the two adjustable plate portions (4, 5) mutually rotary.

3. Harness according to claim 1 or 2, **characterized in that** the connection (3) is adjustable between at least two different positions (13a, 13b, 13c) in the longitudinal direction of the back plate, to accommodate for users of different height.

4. Harness according to any of claims 1 to 3, **characterized in that** the shoulder straps (6) are connected to the upper plate portion (4) and that the waist belt (8) is connected to the lower plate portion (5).

5. Harness according to any of claims 1 to 4, **characterized in that** the connection (3) is a snap connection (14, 17, 18, 19).

6. Harness according to claim 2, **characterized in that** the rotatable connection (3) comprises a limiting device (20) for limiting the mutual rotation of the two plate portions (4, 5) to less than a quarter of a turn in both directions from a neutral, upright position of the back plate (2).

7. Harness according to claim 6, **characterized in that** the rotatable connection (3) comprises a limiting device (20) for limiting the mutual rotation of the two plate portions (4, 5) to less than 45 degrees in both directions from a neutral, upright position of the back plate (2).

8. Harness according to any of claims 1 to 7, **characterized in that** an upper plate portion (4), is connected to the shoulder straps, and that said upper plate portion (4), in the area where it overlaps with the lower plate portion (5), is positioned closer to the body of the user than the lower plate portion (5).

9. Harness according to claim 8, **characterized in that** the lower plate portion (5) remains in an upright position as the user bends to the side.

10. A system comprising a clearing saw and a harness according to any of the previous claims.

## Patentansprüche

1. Tragegeschirr für eine Freischneidsäge, wobei das Tragegeschirr eine Rückenplatte umfasst, wobei die Rückenplatte Anschlüsse für Schulterriemen (6) und weitere Befestigungsriemen, etwa einen Bauchgurt (3), umfasst, wobei das Tragegeschirr ferner eine Hüftplatte (9) umfasst, die mit einem Haken (10) zur Verbindung mit der Freischneidsäge versehen ist,
wobei die Hüftplatte (9) und der Haken (10) an einem Tragriemen (12) angehängt sind,
**dadurch gekennzeichnet, dass** die Rückenplatte (2) einen steifen oberen Plattenabschnitt (4) und einen steifen unteren Plattenabschnitt (5) umfasst, wobei die Plattenabschnitte (4, 5) miteinander über eine Verbindung (3) verbunden oder verbindbar sind, wobei die Plattenabschnitte in Bezug aufeinander einstellbar sind, um einem Benutzer, der das Tragegeschirr trägt, guten Komfort zu bieten,
wobei der Tragriemen sich von dem unteren Plattenabschnitt (5) weg erstreckt.

2. Tragegeschirr nach Anspruch 1, **dadurch gekennzeichnet, dass** die Verbindung (3) drehbar ist, was die beiden Plattenabschnitte (4, 5) gegenseitig drehbar macht.

3. Tragegeschirr nach Anspruch 1 oder 2, **dadurch gekennzeichnet, dass** die Verbindung (3) zwischen zumindest zwei unterschiedlichen Positionen (13a, 13b, 13c) in der Längsrichtung der Rückenplatte einstellbar ist, um Benutzer mit unterschiedlicher Größe zu berücksichtigen.

4. Tragegeschirr nach einem der Ansprüche 1 bis 3, **dadurch gekennzeichnet, dass** die Schulterriemen (6) mit dem oberen Plattenabschnitt (4) verbunden sind, und dass der Bauchgurt (8) mit dem unteren Plattenabschnitt (5) verbunden ist.

5. Tragegeschirr nach einem der Ansprüche 1 bis 4, **dadurch gekennzeichnet, dass** die Verbindung (3) eine Schnappverbindung (14, 17, 18, 19) ist.

6. Tragegeschirr nach Anspruch 2, **dadurch gekennzeichnet, dass** die drehbare Verbindung (3) eine Begrenzungseinrichtung (20) zur Begrenzung der gegenseitigen Drehung der beiden Plattenabschnitte (4, 5) auf weniger als eine Vierteldrehung in beiden Richtungen aus einer neutralen, aufrechten Position der Rückenplatte (2) heraus umfasst.

7. Tragegeschirr nach Anspruch 6, **dadurch gekennzeichnet, dass** die drehbare Verbindung (3) eine Begrenzungseinrichtung (20) zur Begrenzung der gegenseitigen Drehung der beiden Plattenabschnitte (4, 5) auf weniger als 45 Grad in beiden Richtungen aus einer neutralen, aufrechten Position der Rückenplatte (2) heraus umfasst.

8. Tragegeschirr nach einem der Ansprüche 1 bis 7, **dadurch gekennzeichnet, dass** ein oberer Plattenabschnitt (4) mit den Schulterriemen verbunden ist, und dass der obere Plattenabschnitt (4) in jedem Bereich, wo er mit dem unteren Plattenabschnitt (5) überlappt, näher am Körper des Benutzers positioniert ist als der untere Plattenabschnitt (5).

9. Tragegeschirr nach Anspruch 8, **dadurch gekennzeichnet, dass** der untere Plattenabschnitt (5) in einer aufrechten Position bleibt, wenn der Benutzer sich zur Seite beugt.

10. System umfassend eine Freischneidsäge und ein Tragegeschirr nach einem der vorhergehenden Ansprüche.

## Revendications

1. Harnais pour une débrousailleuse, le harnais comprenant une plaque arrière, la plaque arrière comportant des raccords pour des bretelles (6) et d'autres sangles de fixation, telle qu'une ceinture (8), dans lequel le harnais comprend en outre un protège-hanche (9) pourvu d'un crochet (10) pour être relié à la débrousailleuse, dans lequel le protège-hanche (9) et le crochet (10) sont suspendus sur une sangle de support (12),
**caractérisé en ce que** la plaque arrière (2) comprend une partie de plaque supérieure rigide (4) et une partie de plaque inférieure rigide (5), lesdites parties de plaque (4, 5) étant reliées ou pouvant être reliées l'une à l'autre au moyen d'un raccord (3), lesdites parties de plaque étant réglables l'une par rapport à l'autre pour assurer un bon confort pour un utilisateur portant le harnais, dans lequel la sangle de support (12) s'étend depuis la partie de plaque inférieure (5).

2. Harnais selon la revendication 1, **caractérisé en ce que** le raccord (3) est rotatif, faisant tourner les deux parties de plaque réglables (4, 5) mutuellement.

3. Harnais selon la revendication 1 ou 2, **caractérisé en ce que** le raccord (3) est réglable entre au moins deux positions différentes (13a, 13b, 13c) dans la direction longitudinale de la plaque arrière, pour s'adapter à des utilisateurs de différentes tailles.

4. Harnais selon l'une des revendications 1 à 3, **caractérisé en ce que** les bretelles (6) sont reliées à la partie de plaque supérieure (4) et **en ce que** la ceinture (8) est reliée à la partie de plaque inférieure (5).

5. Harnais selon l'une des revendications 1 à 4, **caractérisé en ce que** le raccord (3) est un raccord par encliquetage (14, 17, 18, 19).

6. Harnais selon la revendication 2, **caractérisé en ce que** le raccord rotatif (3) comprend un dispositif de limitation (20) pour limiter la rotation mutuelle des deux parties de plaque (4, 5) à moins d'un quart de tour dans les deux sens à partir d'une position neutre et verticale de la plaque arrière (2).

7. Harnais selon la revendication 6, **caractérisé en ce que** le raccord rotatif (3) comprend un dispositif de limitation (20) pour limiter la rotation mutuelle des deux parties de plaque (4, 5) à moins de 45 degrés dans les deux sens à partir d'une position neutre et verticale de la plaque arrière (2).

8. Harnais selon l'une des revendications 1 à 7, **caractérisé en ce qu'**une partie de plaque supérieure (4) est reliée aux bretelles, et **en ce que** ladite partie de plaque supérieure (4), dans la zone où elle chevauche la plaque inférieure (5), est positionnée plus près du corps de l'utilisateur que la partie de plaque inférieure (5).

9. Harnais selon la revendication 8, **caractérisé en ce que** la partie de plaque inférieure (5) reste dans une position verticale lorsque l'utilisateur se penche sur le côté.

10. Système comprenant une débrousailleuse et un harnais selon l'une des revendications précédentes.
